# NEUE EUROPÄISCHE PATENTSCHRIFT

(11) **EP 2 036 515 B2**
(45) Veröffentlichungstag und Bekanntmachung des Hinweises auf die Entscheidung über den Einspruch: **08.12.2021**
(45) Hinweis auf die Patenterteilung: 02.04.2014
(21) Anmeldenummer: 07116564.1
(22) Anmeldetag: 17.09.2007
(51) Int. Cl.: A61C 8/00

(54) **Verbindungsanordnung zwischen einem Dentalimplantat und einem Abutment**
Connecting assembly between a dental implant and an abutment
Agencement pour connecter un implant dentaire et une butée

(43) Veröffentlichungstag der Anmeldung: 18.03.2009
(60) Teilanmeldung: 11185957.5
(73) Patentinhaber: Straumann Holding AG, 4002 Basel (CH)
(72) Erfinder: Studer, Roger, 4102 Binningen (CH); Egli, David, 4053 Basel (CH); Mundwiler, Ulrich, 4456 Tenniken (CH)
(74) Vertreter: Modiano, Micaela Nadia

(56) Entgegenhaltungen:
- EP-A- 1 362 560
- WO-A-00/09031
- WO-A-00/47113
- WO-A-00/62704
- WO-A-97/14371
- WO-A-99/16293
- WO-A-2004/032786
- WO-A1-2004/017927
- DE-A1- 19 642 143
- DE-U1- 9 202 656
- KR-B1- 100 665 046
- US-A- 5 116 225
- US-A- 5 238 405
- US-A- 5 571 016
- US-A- 5 660 545
- US-A- 5 733 122
- US-A1- 2001 053 512
- US-A1- 2002 025 505
- US-A1- 2003 224 330
- US-B1- 6 743 018
- US-B2- 6 431 868

## Beschreibung

### Anwendungsgebiet der Erfindung

Die vorliegende Erfindung betrifft eine Verbindungsanordnung zwischen einem Dentalimplantat und einem Abutment, im Besonderen für Schrauben- oder zylinderförmige Dentalimplantate. Eine derartige Verbindungsanordnung umfasst ein hinreichend bekanntes, in den Kieferknochen eines Patienten einsetzbares Dentalimplantat und ein darauf zu fixierendes Abutment. Die Verbindungsanordnung wird dabei in eine zylindrische Öffnung am okklusalen Teil des Dentalimplantats eingesetzt. Zur reproduzierbaren Positionierung des Abutments und zur Rotationssicherung kann in der Aufnahmebohrung eine nicht-rotationssymmetrische Aufnahmekontur vorgesehen sein, zu welcher an der Wurzelpartie des Abutments eine korrespondierende, nicht-rotationssymmetrische äussere Gegenkontur vorhanden ist. Im Inneren eines Dentalimplantats erstreckt sich ein Innengewinde, das durch Eindrehen einer in einem Abutment axial festgehaltenen Schraube, auch Basisschraube genannt, in das Innengewinde des Dentalimplantats diese miteinander fixiert. Nach der Verschraubung mit dem Dentalimplantat liegt die Schraube dabei mit einem konischen Schaftbereich formschlüssig an der inneren Oberfläche des apikalen Bereichs des Abutment an. Der Schaftbereich ragt dabei aus dem Abutment heraus und der Gewindeschaft ist mit dem Gewinde des Dentalimplantats in Eingriff. Die Schraube sichert so das Abutment axial auf dem Dentalimplantat und die nicht-rotationssymmetrische Kontur dient als Rotationssicherung.

### Stand der Technik

Aus der WO 99/16293 ist eine Verbindungsanordnung zwischen einem Dentalimplantat und einem Abutment mit einer darin befindlichen Schraube, die von einem Stützring gehalten wird, bekannt, wobei der Stützring am apikalen Ende des Abutments in einem Haltebereich kraft- und formschlüssig gesichert ist. Auch wäre die Verwendung eines geklemmten mit Schlitzen versehenen Stützrings und/oder eines ebenfalls im apikalen Bereich geschlitzten Abutments denkbar.
Die vormontierte Schraube ist dabei von unten in eine Bohrung im Abutment eingeführt und ist gegen Herausfallen aus dem Abutment von dem Stützring gesichert. Darüber hinaus ist es erforderlich, den Stützring im Haltebereich am Abutment derart zu sichern, dass ein Aufbrechen oder Druchbrechen des Stützrings bei hoher Belastung verhindert wird. Es hat sich in der Praxis erwiesen, dass sich die so vormontierte Schraube in einem derartigen Fall unter sehr hoher Belastung vom Abutment lösen kann und die feste Verbindung des Dentalimplantats mit dem Abutment nicht mehr gewährleistet ist. Dies kann durch Materialermüdung hervorgerufen werden, da die Verbindungsanordnung starken Zugspannungen ausgesetzt ist. Eine erste Zugspannung entsteht bei der Montage der Verbindungsanordnung mit dem Dentalimplantat, wobei diese Zugspannung im Bereich der Schraubenauflage entsteht. Beim Einsetzen eines Dentalaufbaus, z. B. einer Krone oder Brücke, entsteht eine zweite Zugspannung durch das Eindrehen der Okklusalschraube in das Abutment-Gewinde. Die Belastung, die auf den die Schraubenauflage bildenden Stützring ausgeübt wird, ist dabei die Summe der ersten und zweiten Zugspannung, wobei in der Regel die erste Zugspannung größer ist als die zweite Zugspannung. Diese Krafteinwirkung im Bereich der Übergangsstelle von Stützring und sich darauf abstützenden Schraubenkopf kann dann zu einer Materialermüdung und/oder zum Bruch des Stützrings führen.

Aus der DE 92 02 656 U1 ist ein Grundkörper mit einem Kugelgeleute bekannt, worin die Verschlussschraube des Grundkörpers, nach dem Verschrauben am Grundkörper und Kontaktieren des Kugelgeleutes, unlösbar durch Schweißen fixiert wird.

Es ist daher die Aufgabe der vorliegenden Erfindung eine Lösung zu finden, die höhere Zugspannungen im Haltebereich der Basisschraube standhält, eine höhere Lebensdauer aufweist, extrem hohe mechanische Festigkeit besitzt und ohne erhöhten Kostenaufwand hergestellt werden kann.
Im Rahmen der obigen Aufgabe der Erfindung besteht eine weitere Aufgabe in der Bereitstellung einer Stützringes, an dem die Zugkraft reduziert wird und das Risiko des Durchbrechens desselben minimiert wird.

### Zusammenfassung der Erfindung

Die obigen Aufgaben werden durch eine Verbindungsanordnung gemäß den Hauptanspruch 1 gelöst. Weiterevorteilhafte Ausgestaltungen der Erfindung werden in den Unteransprüchen ausgeführt.
Im Abutment ist eine erste Öffnung vorhanden, die axial ausgebildet ist. Eine Schraube wird dann durch diese erste Öffnung in den Innenbereich eines Abutments eingeführt. Eine zweite Öffnung im Abutment dient zur Hindurchführung des Schraubenschafts und des Gewindeschafts, wobei die zweite Öffnung einen geringeren Durchmesser als die erste Öffnung hat und einen konischen Bereich hat. Der geringere Durchmesser der zweiten Öffnung bewirkt, dass die eingeführt Schraube nicht aus dem Abutment herausgleiten kann, wobei der Schraubenschaft einen Bereich aufweist der konisch ausgebildet ist und an einer korrespondierenden konischen Innenfläche des Abutments zum Anliegen kommt. Dann wird ein Ring in den koronalen Bereich des Abutments eingesetzt und fixiert. Die Fixierung ist erfindungsgemäß stoffschlüssig ausgeführt. Die Fixierung des Rings im Abutment erfolgt erfindungsgemäß durch Schweissen. Der Ring ist gemäß der Erfindung mit dem Abutment in der Öffnung stoffschlüssig verschweißt. Dabei haben sich das Laserschweißverfahren und das Ultraschallschweißverfahren als besonders vorteilhaft erwiesen. Diese Schweißverfahren zeichnen sich durch hohe Schweißgeschwindigkeit, erzielen einer schmalen und schlanker Schweißnaht und geringen thermischen Verzug aus, was den hohen Genauigkeitsansprüchen in der Dentaltechnik gerecht wird.
Erfindungsgemäß weist der Ring ein Innengewinde auf. Das Zusammensetzen der Verbindungsanordnung aus Abutment mit darin eingeschlossener Schraube, welche durch den koronal angeordneten Ring nicht herausfallen kann, und Dentalimplantat geschieht folgendermaßen. Das Abutment wird mit dem Gewindeschaft der Schraube in die Öffnung des Dentalimplantats eingeführt, so dass der Gewindeschaft in den Bereich der Öffnung des Dentalimplantats hineinreicht. Das Abutment ist auf der Außenfläche mit Konturen versehen, die zur Rotationssicherung dienen. Diese Konturen greifen sowohl beim Aufsetzen mit einer komplementären Struktur am Kronenaufbau und mit einer komplementären Struktur am Dentalimplantat ein. In einem zentralen Innenbereich des Abutments ist ein Hohlraum ausgebildet, der ein gewisses Spiel der Schraube zulässt. Das Spiel ist dabei von der Unterkante des Rings und dem Anliegen des konischen Schraubenbereichs bestimmt und ermöglicht vorteilhaft das Einschrauben der Schraube in ein Dentalimplantat ohne zu Verkanten. Die Schraube wird nach Einsatz der Verbindungsanordnung durch die axiale Öffnung mit einem speziellen Schraubendreher im Dentalimplantat verschraubt. Dabei zieht sich das Abutment mehr und mehr in das Dentalimplantat, solange bis der konisch ausgeführte Schraubenschaft an der unteren, dem Dentalimplantat zugewandten Seite, Abutmentinnenfläche angedrückt ist, so dass eine Kontaktfläche entsteht, die die auftretenden Kräfte der Zugspannung von Schraube und Dentalimplantat aufnimmt.

### Kurzbeschreibung der Figuren

Weitere Merkmale und Vorteile der vorliegenden Erfindung sowie die Wirkungsweise der exemplarischen Ausführungsform der vorliegenden Erfindung werden unten mit Bezug auf die begleitenden Zeichnungen beschrieben. Die begleitenden Zeichnungen veranschaulichen die vorliegenden Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt. Dabei zeigen:
Fig. 1A eine Perspektivansicht einer Verbindungsanordnung zwischen einem Dentalimplantat und Abutment gemäß einer ersten Ausführungsform der Erfindung;
Fig. 1B eine Draufsicht einer Verbindungsanordnung zwischen einem Dentalimplantat und Abutment gemäß Fig. 1A;
Fig. 1C eine Seitenansicht im Teilschnitt der Schnittlinie A-A von Fig. 1B;
Fig. 2A eine Perspektivansicht einer Verbindungsanordnung zwischen einem Dentalimplantat und Abutment gemäß einer zweiten Ausführungsform, die nicht Teil der beanspruchten Erfindung ist;
Fig. 2B eine Draufsicht einer Verbindungsanordnung zwischen einem Dentalimplantat und Abutment gemäß Fig. 2A;
Fig. 2C eine Seitenansicht im Teilschnitt der Schnittlinie A-A von Fig. 2B;
Fig. 3A eine Perspektivansicht einer Verbindungsanordnung zwischen einem Dentalimplantat und Abutment gemäß einer dritten Ausführungsform, die nicht Teil der beanspruchten Erfindung ist;
Fig. 3B eine Draufsicht einer Verbindungsanordnung zwischen einem Dentalimplantat und Abutment gemäß Fig. 3A;

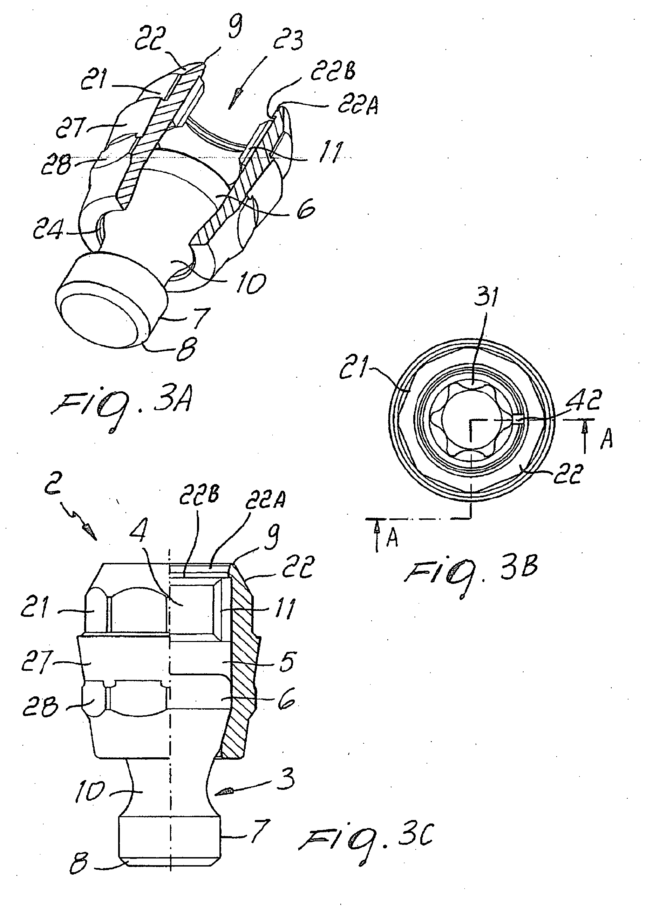

Fig. 3A eine Seitenansicht im Teilschnitt der Schnittlinie A-A von Fig. 3B;

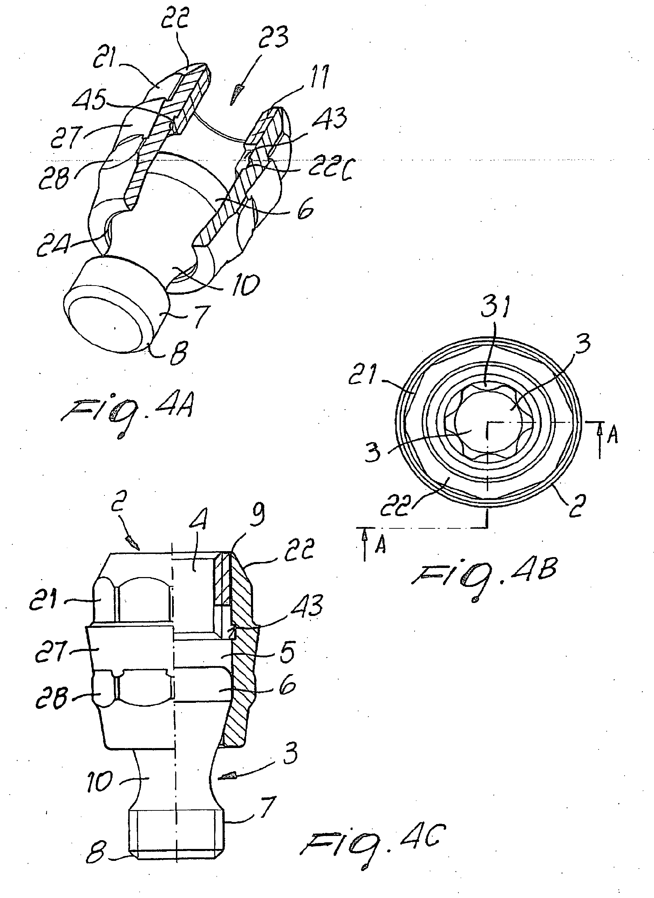

Fig. 4A eine Perspektivansicht einer Verbindungsanordnung zwischen einem Dentalimplantat und Abutment gemäß einer vierten Ausführungsform, die nicht Teil der beanspruchten Erfindung ist;
Fig. 4B eine Draufsicht einer Verbindungsanordnung zwischen einem Dentalimplantat und Abutment gemäß Fig. 4A;
Fig. 4A eine Seitenansicht im Teilschnitt der Schnittlinie A-A von Fig. 4B;

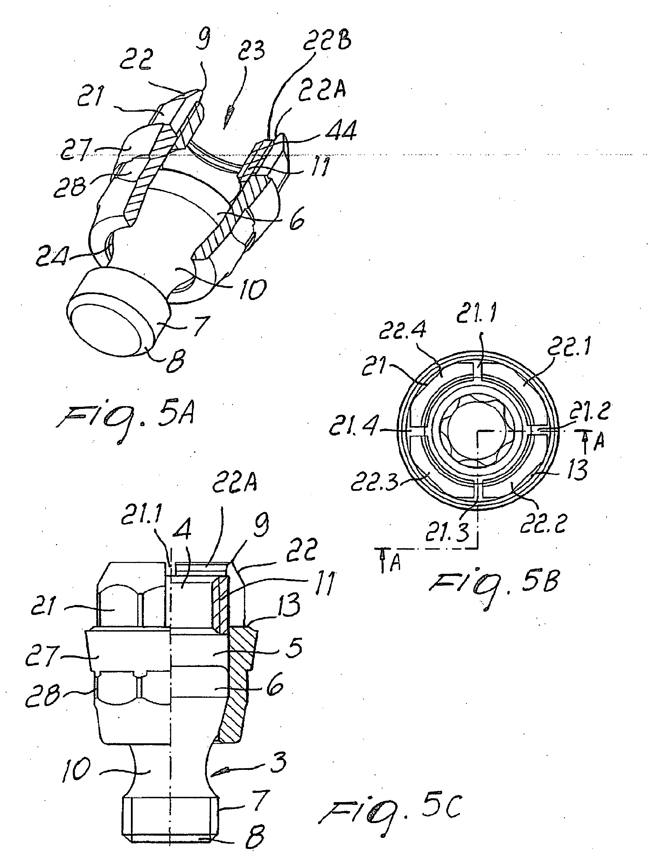

Fig. 5C eine Perspektivansicht einer Verbindungsanordnung zwischen einem Dentalimplantat und Abutment gemäß einer fünften Ausführungsform, die nicht Teil der beanspruchten Erfindung ist;
Fig. 5B eine Draufsicht einer Verbindungsanordnung zwischen einem Dentalimplantat und Abutment gemäß Fig. 5A;
Fig. 5A eine Seitenansicht im Teilschnitt der Schnittlinie A-A von Fig. 5B;

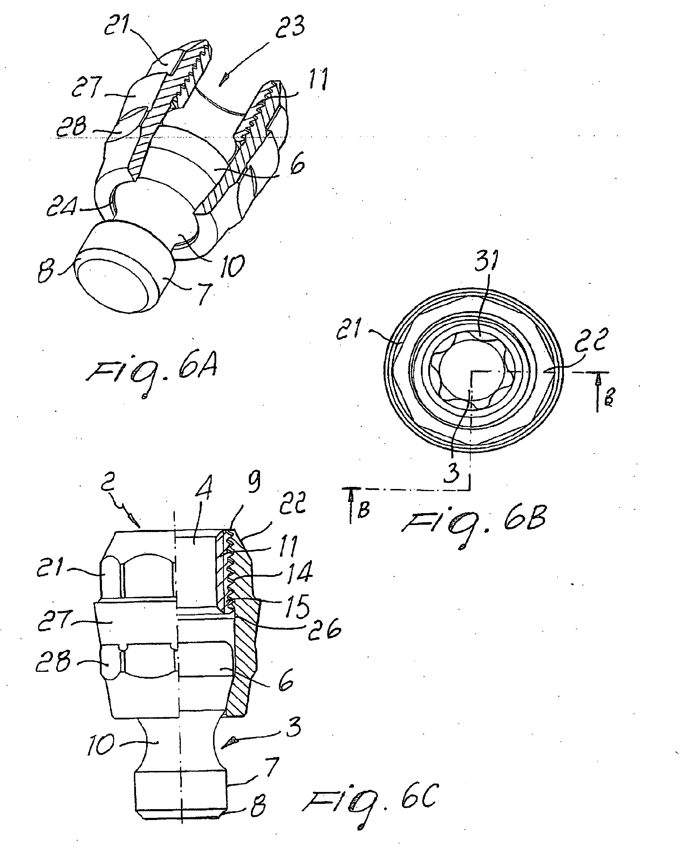

Fig. 6C eine Perspektivansicht einer Verbindungsanordnung zwischen einem Dentalimplantat und Abutment gemäß einer sechsten Ausführungsform, die nicht Teil der beanspruchten Erfindung ist ;
Fig. 6B eine Draufsicht einer Verbindungsanordnung zwischen einem Dentalimplantat und Abutment gemäß Fig. 6A;
Fig. 6C eine Seitenansicht im Teilschnitt der Schnittlinie B-B von Fig. 6B;

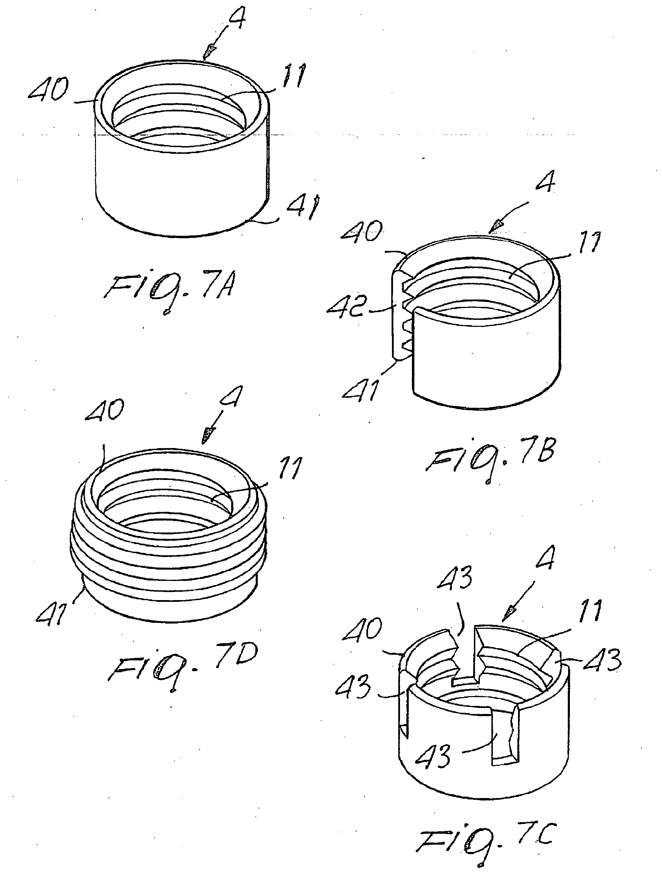

Fig. 7A eine Perspektivansicht eines Rings in geschlossener Ausführung;
Fig. 7B eine Perspektivansicht eines Rings mit einem Vertikalschlitz;
Fig. 7C eine Perspektivansicht eines Rings mit mehreren Dehnungsschlitzen;
Fig. 7D eine Perspektivansicht eines Rings mit Innen- und Außengewinde;

### Beschreibung der bevorzugten Ausführungsformen der Erfindung

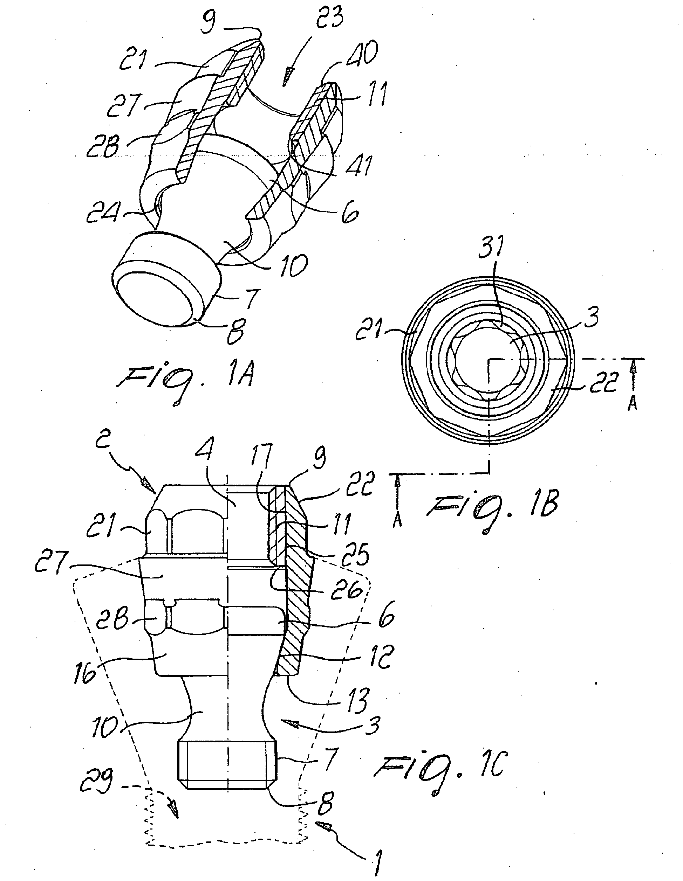

Anhand der nachfolgenden Figuren 1Abis 7C werden gegenwärtig bevorzugte Ausführungsformen der vorliegenden Erfindung einer Verbindungsanordnung zwischen einem Dentalimplantat und einem Abutment mit einem mit einer ersten und einer zweiten Öffnung bereitgestellten Abutment, einer Schraube und einem Ring, wobei der Ring zum Festhalten einer im Abutment eingesetzten Schraube geeignet ist, beschrieben.

Figuren 1A-1C zeigen eine Verbindungsanordnung zwischen einem Dentalimplantat 1 und einem Abutment 2, mit einer im Abutment 2 festgehaltenen Schraube 3 (auch Basisschraube genannt) in verschiedenen Ansichten gemäß einer ersten Ausführungsform der Erfindung.

Die Schraube 3 ist dabei von oben, d. h. durch eine erste Öffnung 23 axial durch das Abutment 2 hindurchgehend eingesetzt. Der Schraubenschaft 10 der Schraube 3 mit daran anschliessendem Gewindeschaft ragt dabei durch eine zweite Öffnung 24 im Abutment 2 heraus. Das Abutment 2 weist koronal beginnend einen Abutmentrand 9 auf, der in einen Konusbereich 22 übergeht. Daran anschliessend befindet sich ein erster Außenachtkant 21 der mit einer, nicht dargestellten, Suprakonstruktion oder Krone in Eingriff gebracht werden kann. Im zentralen Bereich weist das Abutment 2 koronal einen ersten Konusabschnitt 27 auf, und apikal einen zweiten Außenachtkant 28, der in einen ebenfalls konischen, apikalen Endbereich 16 des Abutments 2 übergeht, auf. Zum besseren Verständnis zeigt Fig. 1C schematisch ein axial auf dem Abutment 2 aufgesetztes Dentalimplantat 1. Im Inneren des Abutments 2 befindet sich ein durch die erste Öffnung 23 eingesetzter Ring 4, der sich beginnend vom Abutmentrand 9 bis an eine umlaufende Nut 26 des Abutments 2 erstreckt. Der Ring 4 ist in bekannter Weise mit einem Innengewinde 11 zur Aufnahme von dentalen Suprakonstruktionen oder Kronen ausgebildet. Darüber hinaus kann der Ring 4 vorzugsweise mit einem Außengewinde 15 (nachstehend auch Ring-Außengewinde) ausgestattet werden, wobei er in dieser Form der Ring als "Ring mit Gewinde" bezeichnet wird und dessen Funktion nachstehen erläutert wird.

Der Ring 4 kann entweder in die erste Öffnung 23 formschlüssig eingepresst werden oder erfindungsgemäß mittels Schweissen, z. B. mittels Laser- oder Ultraschallschweißen fixiert werden. Wenn der Ring 4 eingepresst wird, kann auch eine Struktur auf der Ringoberfläche 17 mit einem Gewinde aufgebracht werden, um so eine bessere Haftung des Rings 4 an einer angrenzenden Oberfläche 25 im Inneren des Abutments 2 zu erreichen. Letztere Ausführung mit einem Gewinde auf der Ringoberfläche ist nicht ein Teil der beanspruchten Erfindung. Die angrenzende Oberfläche 25 bildet dabei die Übergangsfläche zwischen Ring 4 und Abutment 2. Wenn der Ring 4 eingeschweißt wird, werden die Schweißstellen im Bereich einer Ringoberkante 40 angebracht. Vorzugsweise können die Schweißstellen auch im Bereich einer Ringunterkante 41 angebracht werden. An der Ringunterlcante 41 ist ein Hohlraum 5 vorhanden, der sich bildet, wenn der Schraubenkopf 6 der Schraube 3 nicht an dem Ring 4 anliegt, was ein gewisses Spiel beim Verschrauben der Schraube 3 mit dem Dentalimplantat 1 erlaubt. Die Schraube 3 wird durch eine dritte Öffnung 29 im Dentalimplantat 1 in dasselbe geführt, wobei eine Fase 8 am apikalen Ende der Schraube 3, die im Anschluß an das Gewinde 7 der Schraube 3 liegt, ein leichtes Einsetzen in ein im Dentalimplantat 1 befindlichen Gewinde (nicht dargestellt) ermöglicht. Dabei kann das Gewinde 7 der Schraube 3 mit den (nicht gezeigten) Gewinde des Dentalimplantats 1 verschraubt werden. Die Schraube 3 ist am koronalen Ende mit einer Eingriffkontur 31 ausgebildet, so dass wenn die Schraube 3 mittels eines in die Eingriffkontur 31 eingebrachten Schraubendrehers mit dem Dentalimplantat 1 verschraubt wird, liegt der den Schraubenkopf bildenden konische Bereich oberhalb des Schraubenschafts 10 formschlüssig an einer Kontaktfläche 12 des Abutments 2 an, die im Wesentlichen von einer Abutmentunterkante 13 begrenzt wird.

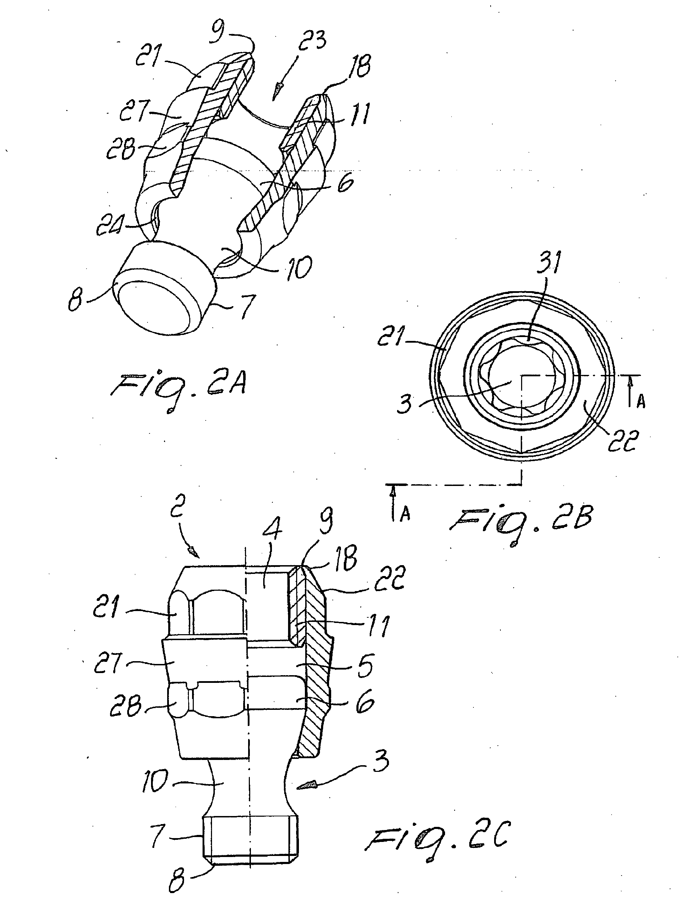

Figuren 2A-2C zeigen eine zweite Ausführungsform, die nicht Teil der beanspruchten Erfindung ist, wobei in Abweichung von der ersten Ausführungsform der Ring 4 im Inneren des Abutments 2 durch die erste Öffnung 23 eingepresst ist und sich beginnend vom Abutmentrand 9 bis an die umlaufende Nut 26 erstreckt. Der Abutmentrand 9 ist mittels einer Bördelung 18 im Übergangsbereich zwischen Konusbereich 22 und Abutmentrand 9 leicht zur Mittelachse des Abutments 2 geneigt. Anstelle der Bördelung 8, kann dieser Formschluss auch mittels Rollen ausgebildet werden.

Figuren 3A-3C zeigen eine dritte Ausführungsform, die nicht Teil der beanspruchten Erfindung ist, wobei in Abweichung von der ersten Ausführungsform der Ring 4 einen durchgehenden Vertikalschlitz 42 aufweist. Am Abutmentrand 9 im Bereich der ersten Öffnung 23 ist eine Anschrägung 22A ausgebildet, die von einem Abutment-Schnapper 22B begrenzt ist. Der Ring 4 wird zum Fixieren im Abutment 2 zuerst zusammengedrückt, so dass er etwa dengleichen, oder etwas geringeren, Durchmesser der ersten Öffnung 23 hat, um durch die Öffnung 23 hindurchzupassen. Die durch das Zusammendrücken aufgebaute Spannung im Ring 4 verursacht, dass nach Überschreiten des Abutment-Schnappers 22B in apikaler Richtung, der Ring 4 sich aufweiten kann und somit fest an der Innenfläche des Abutments 2 fixiert ist.

Figuren 4A-4C zeigen eine vierte Ausführungsform, die nicht Teil der beanspruchten Erfindung ist, wobei in Abweichung von der ersten Ausführungsform der Ring 4 mit zwei oder mehreren Dehnungsschlitzen 43 versehen ist. Der Ring 4 wird zum Fixieren im Abutment 2 eingepresst, wodurch der Ring 4 im Bereich der Dehnungsschlitze 43 nachgibt und sich bis zum Erreichen einem in der ersten Öffnung 23 befindlichen Abutment-Hinterstich 22C mit dem Ring-Schnapper 45 in den Abutment-Hinterstich 22C einschnappt.

Figuren 5A-5C zeigen eine fünfte Ausführungsform, die nicht Teil der beanspruchten Erfindung ist, wobei in Anlehnung an die erste Ausführungsform der Ring 4 als ununterbrochener Ring ausgebildet ist. Abweichend von der ersten Ausführungsform ist jedoch der koronale Abutmentbereich, der von dem Konusbereich 22 und dem ersten Außenachtkant 21 gebildet wird, mit mehreren symmetrisch angeordneten Dehnungsschlitzen 21.1, 21.2, 21.3, 21.4 versehen. Dadurch wird der koronale Abutmentbereich in mehrere symmetrisch angeordnete Segmente 22.1, 22.2, 22.3, 22.4 unterteilt. Der Ring 4 wird zum Fixieren im Abutment 2 eingepresst, wodurch die symmetrisch angeordneten Segmente 22.1, 22.2, 22.3, 22.4 sich aufweiten und den Ring 4 bis zu dem Punkt, wo der gesamte Ring 4 mit dem Ring-Hinterstich den Abutment-Schnapper 22B überwunden hat. Zu diesem Zeitpunkt verengen sich die vorher aufgeweiteten Segmente 22.1, 22.2, 22.3, 22.4 des Abutments 2 wieder und fixieren den Ring 4 im Abutment 2. Zur leichten Einführung des Rings 4 befindet sich zwischen Abutmentrand 9 und dem Abutment-Schnapper 22B, eine Anschrägung 22A. Es ist auch möglich, die Ausführungsform der Figuren 5A-5C mit einem Vertikalschlitz der Ausführungsform der Figuren 3A-3C oder Fig. 7 zu kombinieren,

Figuren 6A-6C zeigen eine sechste Ausführungsform, die nicht Teil der beanspruchten Erfindung ist, wobei in Anlehnung an die erste Ausführungsform der Ring 4 als ununterbrochener Ring 4 ausgebildet ist. Der Ring 4 weist dabei das Innengewinde 11 und ein Ring-Außengewinde 15 auf. Die erste Öffnung 23 des Abutments 2 weist beginnend an dem Abutmentrand 9 bis zu einer zentral im Inneren des Abutments 2 eingebrachten umlaufenden Nut 26 ein Abutment-Innengewinde 14 auf. Der Ring 4 wird dabei in das Abutment-Innengewinde 14 formschlüssig eingeschraubt, wobei die umlaufende Nut 26 ein Überdrehen des Rings 4 in apikaler Richtung verhindert. Vorteilhaft ist das Innengewinde 11 und das Ring-Außengewinde 15 gleichgerichtet.

Figur 7A zeigt einen Ring 4 in Vollausführung. In dieser Ausführung besteht der Ring 4 aus einem rohrförmigen Element, das an der Ringoberkante 40 einen Gewindeansatz für das Innengewinde 11 bildet. An der Ringunterkante 41 befindet sich der komplementäre Gewindeansatz des Innengewindes 11. Das Innengewinde 11 ist dabei auf der gesamten internen Oberfläche des Rings 4 ausgebildet Die Ring-Außenfläche kann dabei glatt oder mit einer Struktur versehen sein, um das Lösen beim Schrauben zu verhindern. Die Struktur kann dabei als Rillen, Rändelung, Gewinde oder Mikrogewinde ausgebildet sein, wobei jedoch auch andere Rauhheitsstrukturen denkbar sind.

Figur 7B zeigt einen Ring 4 mit einem durchgehenden Vertikalschlitz 42, so dass er in diesem Bereich offen ist. Der Ring 4 ist ebenfalls ein rohrförmiges Element, wobei das Innengewinde 11 auf der gesamten internen Oberfläche ausgebildet ist.

Figur 7C zeigt einen Ring 4 in Vollausführung mit mehreren Dehnungsschlitzen 43, wobei die Dehnungschlitze 43 symmetrisch angeordnet sind und sich bis in den zentralen Bereich des Rings erstreken.

Figur 7D zeigt einen Ring 4 in Vollausführung mit einem auf der gesamten Oberfläche ausgebildeten Innengewinde 11 und einem Ring-Außengewinde 15. Die Ausführung die Fig. 7D ist nicht ein Teil der beanspruchten Erfindung.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

| Bezugszeichenliste | |
|---|---|
| 1. | Dentalimplantat |
| 2. | Abutment |
| 3. | Schraube bzw. Basisschraube |
| 4. | Ring |
| 5. | Hohlraum |
| 6. | Schraubenkopf |
| 7. | Gewindeschaft |
| 8. | Fase |
| 9. | Abutmentrand |
| 10. | Schraubenschaft |
| 11. | Innengewinde des Rings |
| 12. | Kontaktfläche |
| 13. | Abutmentunterkante |
| 14. | Abutment-Innengewinde |
| 15. | Ring-Außengewinde |
| 16. | apikaler Endbereich |
| 17. | Ringoberfläche |
| 18. | Bördelung |
| 19. | |
| 20. | |
| 21. | 1. Außenachtkant |
| 21.1 | 1. Dehnungsschlitz |
| 21.2 | 2. Dehnungsschlitz |
| 21.3 | 3. Dehnungsschlitz |
| 21.4 | 4. Dehnungsschlitz |
| 22. | Konusbereich |
| 22A | Anschrägung |
| 22B | Abutment-Schnapper |
| 22C | Abutment-Hinterstich |
| 22.1 | 1. Segment |
| 22.2 | 2. Segment |
| 22.3 | 3. Segment |
| 22.4 | 4. Segment |
| 23. | 1. Öffnung |
| 24. | 2. Öffnung |
| 25. | angrenzende Oberfläche des Abutments |
| 26. | umlaufende Nut |
| 27. | 1. Konusabschnitt |
| 28. | 2. Außenachtkant |
| 29. | 3. Öffnung |
| 30. | |
| 31. | Eingriffskontur |
| 32. | 2. Konusabschnitt |
| 33. | |
| 34. | |
| 35. | |
| 36. | |
| 37. | |
| 38. | |
| 39. | |
| 40. | Ringoberkante |
| 41. | Ringunterkante |
| 42. | Vertikalschlitz |
| 43. | Dehnungsschlitze |
| 44. | |
| 45. | Ring-Schnapper |

## Patentansprüche

1. Verbindungsanordnung zwischen einem Dentalimplantat (1) und einem Abutment (2), umfassend ein mit einer ersten koronalen Öffnung (23) und einer zweiten apikalen Öffnung (24) bereitgestelltes Abutment (2), eine Schraube (3) und einen Ring (4), wobei der Ring (4) zum Festhalten einer im Abutment (2) eingesetzten Schraube (3) im nicht am Dentalimplantat (1) montierten Zustand des Abutments (2) geeignet ist, wobei der Ring (4) in der ersten Öffnung (23) des Abutments (2) stoffschlüssig verschweißt ist, und wobei das Verschweißen des Rings (4) in der ersten Öffnung (23) des Abutments (2) im Bereich einer Ringoberkante (40) erfolgt, wobei der Ring (4) mit einem Innengewinde (11) zur Aufnahme von dentalen Suprakonstruktionen oder Kronen ausgebildet ist,

2. Verbindungsanordnung gemäß Anspruch 1, **dadurch gekennzeichnet, dass** der Ring (4) mit dem Abutment (2) mittels Laserschweißen oder Ultraschallschweißen verschweißt ist.

3. Verbindungsanordnung gemäß Anspruch 1 oder 2, **dadurch gekennzeichnet, dass** das Verschweißen des Rings (4) in der ersten Öffnung (23) des Abutments (2) im Bereich einer Ringunterkante (41) des Ringes (4) erfolgt.

4. Verbindungsanordnung gemäß einem oder mehreren der vorangehenden Ansprüche, **dadurch gekennzeichnet, dass** an der Ringunterkante (41) des Rings (4) ein Hohlraum (5) vorhanden ist, der sich bildet, wenn der Schraubenkopf (6) der Schraube (3) nicht an dem Ring (4) anliegt, um ein Spiel beim Verschrauben der Schraube (3) mit dem Dentalimplantat (1) zu ermöglichen.

5. Verbindungsanordnung gemäß einem oder mehreren der vorangehenden Ansprüche, **dadurch gekennzeichnet, dass** die Schraube (3) an ihrem koronalen Ende mit einer Eingriffkontur (31) ausgebildet ist, so dass die Schraube (3) mittels eines in die Eingriffkontur (31) eingebrachten Schraubendrehers mit dem Dentalimplantat (1) verschraubt werden kann

6. Verbindungsanordnung gemäß einem oder mehreren der vorangehenden Ansprüche, **dadurch gekennzeichnet, dass** das Abutment (2) eine Kontaktfläche (12) an der zweiten apikalen Öffnung (24) hat, die im Wesentlichen von einer Abutmentunterkante (13) begrenzt wird und die so ausgebildet ist, dass ein den Schraubenkopf (6) bildender konischer Bereich oberhalb des Schraubenschafts (10) formschlüssig an der Kontaktfläche (12) des Abutments (2) anliegt, wenn die Schraube (3) mit dem Dentalimplantat (1) verschraubt wird.

7. Verbindungsanordnung gemäß einem oder mehreren der vorangehenden Ansprüche, **dadurch gekennzeichnet, dass** der Ring (4) als Vollring ausgebildet ist, wobei der Ring (4) aus einem rohrförmigen Element besteht, das an der Ringoberkante (40) des Ringes (4) einen Gewindeansatz für das Innengewinde (11) bildet, wobei an der Ringunterkante (41) des Ringes (4) ein komplementärer Gewindeansatz des Innengewindes (11) gebildet wird, so dass sich das Innengewinde (11) über die gesamte interne Oberfläche des Rings (4) erstreckt.

## Claims

1. Connection assembly between a dental implant (1) and an abutment (2), comprising an abutment (2) provided with a first coronal opening (23) and a second apical opening (24), a screw (3) and a ring (4), the ring (4) being suitable for holding a screw (3) inserted in the abutment (2) in the state where the abutment (2) is not assembled to the dental implant (1), the ring (4) being welded into the first opening (23) of the abutment (2) by material engagement and welding of the ring (4) into the first opening (23) of the abutment (2) taking place within the region of a ring upper edge (40), the ring (4) being provided with an inner thread (11) for receiving dental supraconstructions or crowns.

2. Connection assembly according to Claim 1, **characterized in that** the ring (4) is welded to the abutment (2) by laser welding or ultrasonic welding.

3. Connection assembly according to Claim 1 or 2, **characterized in that** welding of the ring (4) into the first opening (23) of the abutment (2) takes place within the region of a ring lower edge (41) of the ring (4).

4. Connection assembly according to one or more of the preceding claims, **characterized in that** at the ring lower edge (41) of the ring (4), there is a cavity (5) which forms when the screw head (6) of the screw (3) is not resting on the ring (4), so as to allow a play when the screw (3) is screwed to the dental implant (1).

5. Connection assembly according to one or more of the preceding claims, **characterized in that** the screw (3) is formed with an engagement contour (31) at its coronal end so that the screw (3) can be screwed to the dental implant (1) by means of a screwdriver inserted in the engagement contour (31).

6. Connection assembly according to one or more of the preceding claims, **characterized in that** the abutment (2) has a contact surface (12) at its second apical opening (24) which is substantially limited by an abutment lower edge (13) and which is embodied such that a conical portion forming the screw head (6) above the screw shaft (10) positively engages the contact surface (12) of the abutment (2) when the screw (3) is screwed to the dental implant (1).

7. Connection assembly according to one or more of the preceding claims, **characterized in that** the ring (4) is embodied as a complete ring, the ring (4) consisting of a tubular element which, at the ring upper edge (40) of the ring (4), forms a threaded portion for the inner thread (11), a complementary threaded portion of the inner thread (11) being formed at the ring lower edge (41) of the ring (4) so that the inner thread (11) extends over the entire interior surface of the ring (4).

## Revendications

1. Agencement de liaison entre un implant dentaire (1) et une butée (2), comportant une butée (2) pourvue d'une première ouverture coronale (23) et d'une seconde ouverture apicale (24), une vis (3) et une bague (4), dans lequel la bague (4) est adaptée pour retenir une vis (3) insérée dans la butée (2) à l'état non monté sur l'implant dentaire (1) de la butée (2), dans lequel la bague (4) est soudée par assemblage de matière dans la première ouverture (23) de la butée (2), le soudage de la bague (4) s'effectue dans l'ouverture (23) de la butée (2) dans la zone d'un bord supérieur de bague (40), la bague (4) est conçue avec un filetage interne (11) pour recevoir des superstructures dentaires ou des couronnes..

2. Agencement de liaison selon la revendication 1, **caractérisé en ce que** la bague (4) est soudée à la butée (2) par un soudage laser ou un soudage par ultrasons.

3. Agencement de liaison selon la revendication 1 ou 2, **caractérisé en ce que** le soudage de la bague (4) s'effectue dans l'ouverture (23) de la butée (2) dans la zone d'un bord inférieur de bague (41) de la bague (4).

4. Agencement de liaison selon une ou plusieurs des revendications précédentes, **caractérisé en ce qu'**il existe une cavité (5) au niveau du bord inférieur de bague (41) de la bague (4), qui se forme lorsque la tête de vis (6) de la vis (3) ne vient pas en contact contre la bague (4) afin de permettre un jeu lors du vissage de la vis (3) avec l'implant dentaire 1.

5. Agencement de liaison selon une ou plusieurs des revendications précédentes, **caractérisé en ce que** la vis (3) est formée, au niveau de son extrémité coronale, avec un contour de prise (31) de telle sorte que la vis (3) peut être vissée avec l'implant dentaire (1) au moyen d'un tournevis inséré dans le contour de prise (31).

6. Agencement de liaison selon une ou plusieurs des revendications précédentes, **caractérisé en ce que** la butée (2) a une surface de contact (12) au niveau de la seconde ouverture apicale (24) qui est sensiblement limitée par un bord inférieur de butée (13) et qui est formée de telle sorte qu'une zone conique formant la tête de vis (6) au-dessus de la tige de vis (10) est en contact contre la surface de contact (12) de la butée (2) par complémentarité de formes lorsque la vis (3) est vissée avec l'implant dentaire (1).

7. Agencement de liaison selon une ou plusieurs des revendications précédentes, **caractérisé en ce que** la bague (4) est formée comme une bague totale, dans lequel la bague (4) est constituée d'un élément tubulaire qui forme un embout fileté pour le filetage intérieur (11) au niveau du bord supérieur de bague (40) de la bague (4),
dans lequel un embout fileté complémentaire du filetage intérieur (11) est formé au niveau du bord inférieur de bague (41) de la bague (4) de telle sorte que le filetage intérieur (11) s'étend sur toute la surface interne de la bague (4).
